# EUROPEAN PATENT APPLICATION

(11) **EP 4 825 630 A1**
(43) Date of publication of application: **21.10.2026**
(21) Application number: 26169842.7
(22) Date of filing: 31.03.2026
(51) Int. Cl.: B60K 35/22, B60K 35/50, B60R 11/02, B60R 21/02, B60R 11/00

(54) **BUFFER SUPPORT APPARATUS**

(30) Priority: 14.04.2025 JP 2025066392
(71) Applicant: Alps Alpine Co., Ltd., Ota-ku, Tokyo 145-8501 (JP)
(72) Inventor: Onotora, Yamato, Tokyo (JP); Iwatate, Kazuya, Tokyo (JP); Shike, Seiji, Tokyo (JP)
(74) Representative: Schmitt-Nilson Schraud Waibel Wohlfrom Patentanwälte Partnerschaft mbB

(57) **Abstract**

A buffer support apparatus includes a support member; and a hinge member configured to support the support member in a tiltable manner. The hinge member includes a hinge fixing part fixed to a part of a vehicle and a hinge movable part rotatably supported by the hinge fixing part. The support member includes a support fixing part fixed to the hinge movable part and a breakable part that is provided around the support fixing part and that breaks when an impact force acts on the support member. The hinge fixing part includes a tilt controlling part configured to control a tilt of the support member by contacting the hinge movable part when the support member tilts to a predetermined angle.

## Description

The present application is based on and claims priority to Japanese Patent Application No. 2025-066392, filed on April 14, 2025.

The present invention relates to a buffer support apparatus.

Patent Document 1 discloses an in-vehicle apparatus. The in-vehicle apparatus is provided with a device body including a display cell, a support member for rotatably supporting the device body, and a preferential break part for mitigating an impact to an object colliding with the device body.

### RELATED-ART DOCUMENTS

### PATENT DOCUMENTS

Patent Document 1: JP 2020-131773A

In the in-vehicle apparatus described in Patent Document 1, stress at the time of collision of an object with a device body is distributed throughout the device, and there is a possibility that a buffer action due to the breakage of a preferential breakage part is not sufficiently exerted.

An aspect of the present invention provides a buffer support apparatus which supports an in-vehicle apparatus in a tiltable manner and can exert a sufficient buffer action at the time of collision of an object with the device.

The present disclosure relates to a buffer support apparatus according to the appended claims. Embodiments are disclosed in the dependent claims.

A buffer support apparatus according to an aspect includes a support member; and a hinge member configured to support the support member in a tiltable manner, wherein the hinge member includes a hinge fixing part fixed to a part of a vehicle and a hinge movable part rotatably supported by the hinge fixing part, the support member includes a support fixing part fixed to the hinge movable part and a breakable part that is provided around the support fixing part and that breaks when an impact force acts on the support member, and the hinge fixing part includes a tilt controlling part configured to control a tilt of the support member by contacting the hinge movable part when the support member tilts to a predetermined angle.

Other objects and further features of the present invention will be apparent from the following detailed description when read in conjunction with the accompanying drawings, in which:
FIG. 1 is a perspective view of a buffer support apparatus according to an embodiment of the present invention;
FIG. 2 is an exploded perspective view of the buffer support apparatus of FIG. 1;
FIG. 3 is a front view of a support member that is a component of the buffer support apparatus of FIG. 1;
FIG. 4 is a cross-sectional view of the buffer support apparatus of FIG. 1 taken along line IV-IV;
FIG. 5 is an enlarged view of the vicinity of the hinge member in the cross-sectional view of FIG. 4; and
FIG. 6 is a graph illustrating the buffering action of the buffer support apparatus according to an embodiment of the present invention.

According to an aspect, it is possible to provide a buffer support apparatus that supports an in-vehicle apparatus in a tiltable manner and that can exert a sufficient buffer action when an object collides with the device.

Hereinafter, embodiments of the present invention will be described with reference to the drawings. In order to facilitate understanding of the description, the same reference numerals are given to the same components in each of the drawings, and redundant descriptions thereof will be omitted. In each drawing, the scale of each part may be different from the actual scale.

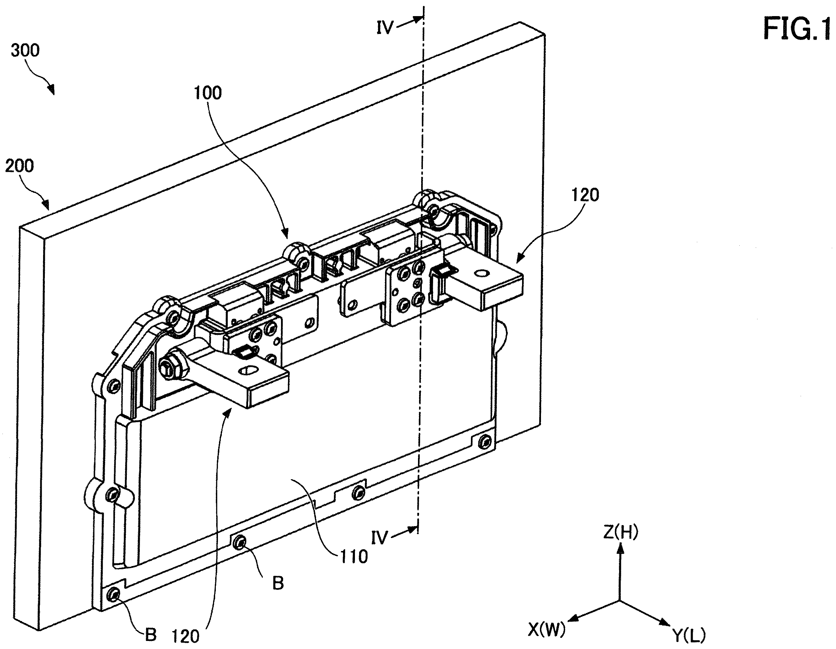

FIG. 1 is a perspective view of a buffer support apparatus 100 according to an embodiment of the present invention. The buffer support apparatus 100 according to the present embodiment is attached to a part of a vehicle such as an automobile, for example, and supports a display device 200 or an information terminal such as a tablet-type personal computer in a tiltable manner. In the example illustrated in FIG. 1, the buffer support apparatus 100 constitutes a part of an in-vehicle apparatus 300 including a display device 200 or an information terminal.

FIG. 1 and each of the drawings referred to in the following description illustrate a three-dimensional orthogonal coordinate system having an X-axis, a Y-axis, and a Z-axis parallel to a vehicle width direction W, a vehicle length direction L, and a vehicle height direction H of a vehicle in which the in-vehicle apparatus 300 including the buffer support apparatus 100 is mounted. The positive directions of the X-axis, Y-axis, and Z-axis of the orthogonal coordinate system are a right direction in the vehicle width direction W, a front direction in the vehicle length direction L, and an upper direction in the vehicle height direction H, respectively.

The buffer support apparatus 100 includes a support member 110 and a hinge member 120 for supporting the support member 110 in a tiltable manner. The support member 110 supports, for example, a display device 200 or an information terminal mounted in a vehicle. The support member 110 is, for example, a plate-like member having a support surface opposite to the back surface of a housing of the display device 200 or the like, and is fixed to the display device 200 or the like via a fastening member such as a bolt B, thereby supporting the display device 200 or the like. The support member 110 may form a part of the housing of the display device 200 or the information terminal.

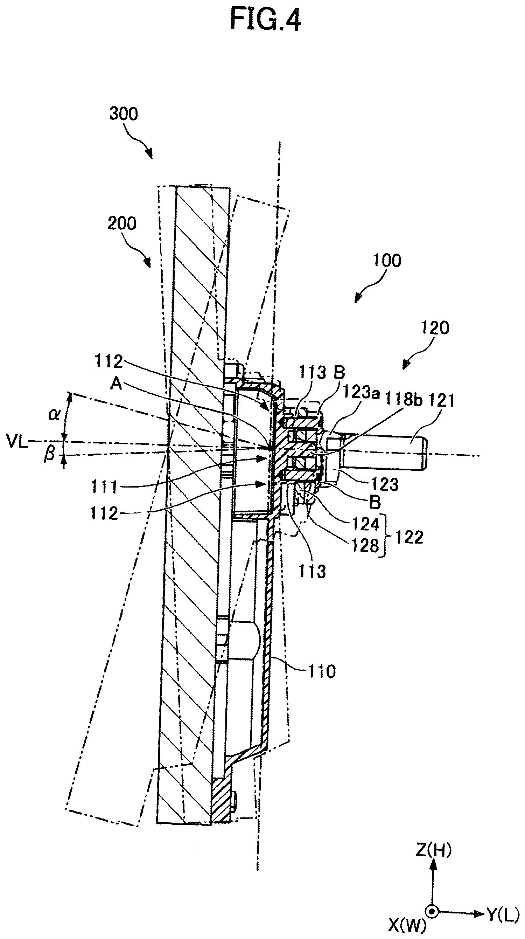

The hinge member 120 is, for example, attached to the upper end of the support member 110 in the vehicle height direction H and to both end parts in the vehicle width direction W, respectively, and supports the support member 110 so as to be tiltable up and down about a rotation axis A (see FIG. 4) substantially parallel to the vehicle width direction W. Although not illustrated, the hinge member 120 is, for example, attached to a bracket fixed to a part of the vehicle such as a backrest of a seat or a ceiling via a fastening member such as a bolt.

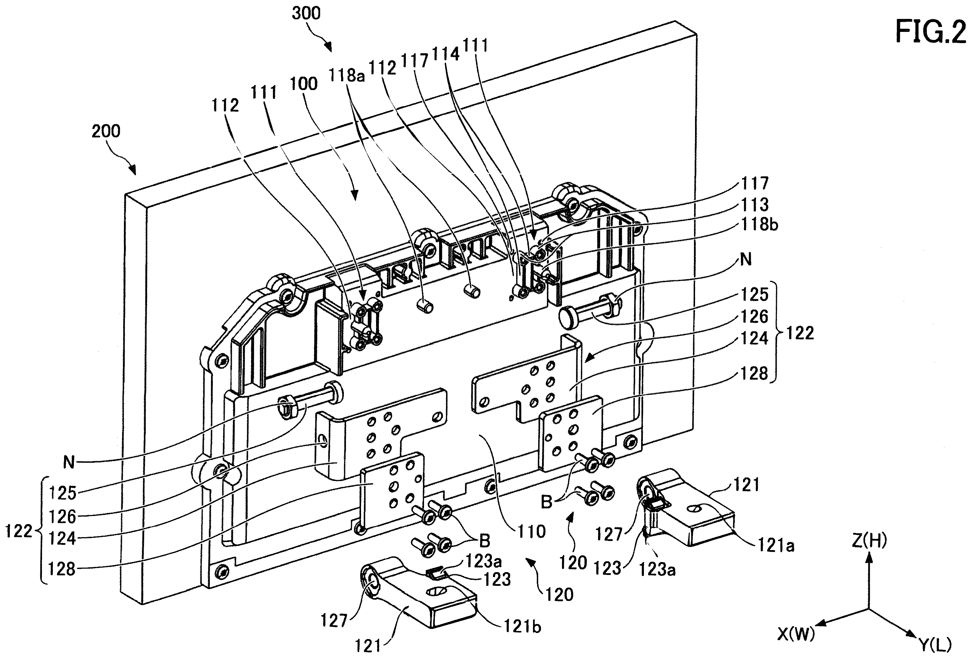

The buffer support apparatus 100 of the present embodiment is characterized by a buffer structure for mitigating an impact received by an object such as an occupant of a vehicle when the object collides with the display device 200 or the information terminal. Hereinafter, embodiments of the buffer structure of the buffer support apparatus 100 will be described in detail with reference to FIGS. 2 to 6.

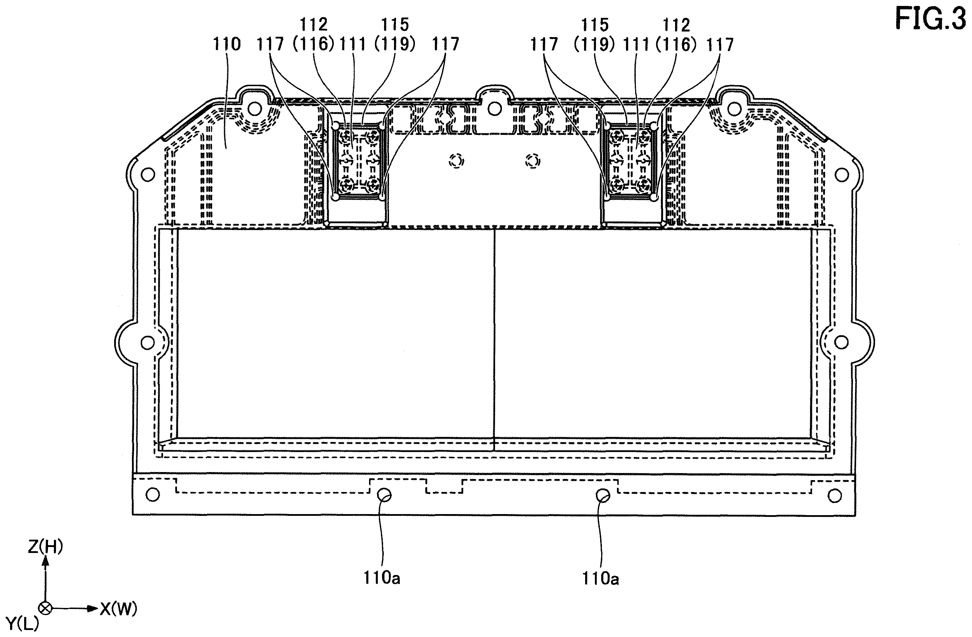

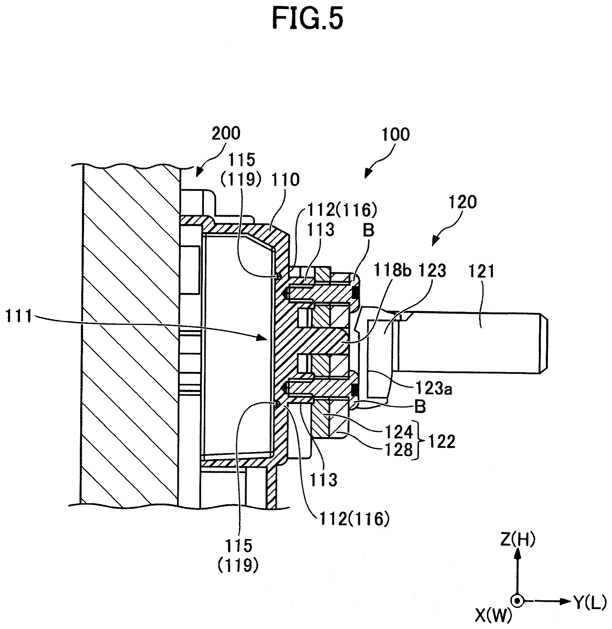

FIG. 2 is an exploded perspective view of the buffer support apparatus 100 of FIG. 1. FIG. 3 is a front view of a support member 110 that is a component of the buffer support apparatus 100 of FIG. 1. FIG. 4 is a cross-sectional view of the buffer support apparatus 100 of FIG. 1 taken along line IV-IV. FIG. 5 is an enlarged view of the vicinity of the hinge member 120 in the cross-sectional view of FIG. 4.

As illustrated in FIG. 2, each of the two hinge members 120 attached to the upper end of the support member 110 has a hinge fixing part 121 fixed to a part of the vehicle and a hinge movable part 122 rotatably supported by the hinge fixing part 121.

The hinge fixing part 121 is, for example, an arm-like member extending in the vehicle length direction L. Among the two hinge members 120, the hinge fixing part 121 of one hinge member 120 has a through hole 121a through which a bolt is inserted, and the hinge fixing part 121 of the other hinge member 120 has an elongated hole 121b through which a bolt is inserted. The elongated hole 121b extends in the vehicle width direction W.

The pair of hinge members 120 is fixed to a part of the vehicle by, for example, the following procedure. First, a bolt inserted into a through hole 121a provided in the hinge fixing part 121 of one hinge member 120 is inserted into a through hole of a vehicle-side bracket fixed to a part of the vehicle, and a nut is attached to the tip of the bolt and fastened. Next, a bolt is inserted into an elongated hole 121b provided in the hinge fixing part 121 of the other hinge member 120 and another through hole provided in the vehicle-side bracket, and a nut is attached to the tip of the bolt and fastened.

Thus, by providing the elongated hole 121b in the hinge fixing part 121 of one hinge member 120 among the two hinge members 120, when the pair of hinge members 120 is attached to the vehicle-side bracket with bolts and nuts, alignment of these through holes is facilitated. The same applies when the vehicle-side bracket has a screw hole for screwing a bolt in place of the through hole.

Each of the hinge fixing parts 121 has a tilt controlling part 123 which contacts the hinge movable part 122 and controls the tilt of the support member 110 when the support member 110 tilts to a predetermined angle α or angle β illustrated in FIG. 4. The tilt controlling part 123 is arranged, for example, opposite to the hinge movable part 122 and extends in the vertical direction along the rotational direction of the hinge movable part 122.

For example, as illustrated in FIG. 2, the tilt controlling part 123 is a columnar part which is provided so as to project in the vehicle width direction W at an intermediate part of the vehicle length direction L which is the length direction of the hinge fixing part 121 and extends in the vehicle height direction H which is the vertical direction. The hinge fixing part 121 and the tilt controlling part 123 are integrally provided, for example, by being formed of a metal material having sufficient rigidity.

The tilt controlling part 123 has, for example, a buffer material 123a which covers a part opposite to the hinge movable part 122. The buffer material 123a is formed, for example, of a resin material having a hardness lower than that of the hinge fixing part 121 and the tilt controlling part 123, and is attached so as to cover a surface of the tilt controlling part 123 which faces the hinge movable part 122.

Each hinge movable part 122 has, for example, a movable plate 124 and a shaft 125. The movable plate 124 is a metallic L-shaped member having, for example, a first part extending in the vehicle width direction W and a second part extending in the vehicle length direction L. The first part of the movable plate 124 has a plurality of through holes through which bolts B are inserted, and is fixed to the support fixing part 111 of the support member 110 by the plurality of bolts B. The second part of the movable plate 124 has a through hole 126 through which the shaft 125 is inserted.

More specifically, the support member 110 has, for example, shaft accommodating parts recessed from a back surface facing forward in the vehicle length direction L toward the rear on either side of the vehicle width direction W at an upper end part in the vehicle height direction H. The second part of the movable plate 124 extending in the vehicle length direction L extends along an inner wall of the recessed shaft accommodating part provided in the support member 110.

The shaft 125 is, for example, a metal rod-shaped member having a shaft part having thread ridges on an outer peripheral surface and a head part provided at one end of the shaft part. The diameter of the head part of the shaft 125 is larger than the diameter of the shaft part of the shaft 125. The shaft 125 is inserted into the through hole 126 by lightly press-fitting its shaft into the through hole 126 provided in the second part of the movable plate 124, and its head is arranged between the second part of the movable plate 124 and the inner wall of the shaft accommodating part of the support member 110. Thus, the movable plate 124 supports the shaft 125 substantially parallel to the vehicle width direction W.

Each hinge fixing part 121 has, for example, a through hole 127 through which the shaft 125 of the hinge movable part 122 is inserted. The through hole 127 of the hinge fixing part 121 penetrates, in the vehicle width direction W, for example, a rear end part in the vehicle length direction L, which is the length direction of the hinge fixing part 121. The rear end part of the hinge fixing part 121 provided with the through hole 127 is located outside the tilt controlling part 123 in the vehicle width direction W.

The shaft 125 of the hinge movable part 122 is inserted, for example, into the through hole 127 of the hinge fixing part 121 in a state where a plurality of disk springs (not illustrated) are attached to the outer periphery of the shaft part of the shaft 125, and a nut N attached to the tip of the shaft part is fastened. Thus, as illustrated in FIG. 4, the hinge movable part 122 is rotatably supported by the hinge fixing part 121 with the center axis of the shaft 125 as the rotation axis A.

Further, the hinge movable part 122 may have a reinforcing plate 128 fixed to the movable plate 124 and opposite to the tilt controlling part 123. The reinforcing plate 128 is, for example, a metallic plate-like member opposite to the first part of the movable plate 124 extending in the vehicle width direction W. The reinforcing plate 128 has, for example, a plurality of through holes at positions corresponding to the plurality of through holes provided in the first part of the movable plate 124. The reinforcing plate 128 is fixed to the support member 110 together with the movable plate 124 by, for example, screwing and fastening the bolts B inserted into the through holes of the reinforcing plate 128 and the movable plate 124 into the screw holes provided in the support member 110.

Note that the reinforcing plate 128 may have screw holes separately from the through holes through which the bolts B are inserted. In this case, the first part of the movable plate 124 may have screw holes for screwing temporary fixing bolts other than the bolts B for fixing the movable plate 124 and the reinforcing plate 128 to the support member 110, or through holes through which the temporary fixing bolts are inserted. Thus, by screwing and fastening the temporary fixing bolts inserted into the through holes of the movable plate 124 into the screw holes of the reinforcing plate 128, the movable plate 124 and the reinforcing plate 128 can be temporarily fixed and integrated. Note that the reinforcing plate 128 may be omitted when the movable plate 124 has sufficient rigidity.

Further, as illustrated in FIG. 2, the support member 110 includes a support fixing part 111 to which the hinge movable part 122 is fixed, and a breakable part 112 provided around the support fixing part 111 and broken when an impact force acts on the support member 110. Here, the impact force for breaking the breakable part 112 is, for example, an impact force of a predetermined range applied to the support member 110 when an object such as an occupant of the vehicle collides with the display device 200 or the information terminal supported by the support member 110 when the vehicle suddenly stops or collides with something.

The support fixing part 111 of the support member 110 has, for example, a projection part 113 projecting toward the hinge movable part 122 of the hinge member 120 as illustrated in FIG. 2. The projection part 113 is, for example, a cylindrical boss projecting forward in the vehicle length direction L from a back surface of the support member 110 facing forward in the vehicle length direction L. The projection part 113 is, for example, a boss with a screw hole provided with screw thread ridges on an inner peripheral surface. For example, the hinge movable part 122 is fixed on the projection part 113 by screwing and fastening a bolt B, which is inserted through the through holes of the movable plate 124 and the reinforcing plate 128, into the screw hole of the projection part 113.

The support fixing part 111 of the support member 110 has, for example, a plurality of projection parts 113 and ribs 114 for connecting the projection parts 113. The ribs 114 are provided, for example, in a flat plate shape projecting forward in the vehicle length direction L from the back surface of the support member 110 facing forward in the vehicle length direction L, and are provided between the outer peripheral surfaces of the mutually adjacent projection parts 113. The ribs 114 include, for example, a first rib 114 for connecting the mutually adjacent projection parts 113 and a second rib 114 for connecting the mutually opposed first ribs 114.

The breakable part 112 is provided around the support fixing part 111 of the support member 110 including, for example, a plurality of projection parts 113 and ribs 114 so as to surround the support fixing part 111. As illustrated in FIGS. 3 to 5, the breakable part 112 includes, for example, a thin part 116 located at the bottom of a recess 115 provided in the support member 110.

The recess 115 of the support member 110 is provided, for example, on the front surface of the support member 110 opposite to the back surface of the support member 110 provided with the projection parts 113 and ribs 114. The recess 115 may be provided on the back surface of the support member 110. The thin part 116 of the support member 110 located at the bottom of the recess 115 is provided, for example, between a plurality of through holes 117 penetrating the support member 110 as illustrated in FIG. 3.

More specifically, as illustrated in FIG. 3, the recess 115 of the support member 110 is, for example, a rectangular recessed groove 119 surrounding the support fixing part 111. The through hole 117 of the support member 110 is provided, for example, at a corner of a rectangular recessed groove 119. The recess 115 is not necessarily the recessed groove 119, but may be a plurality of point-like recesses 115 provided around the support fixing part 111.

Further, as illustrated in FIG. 3, the support fixing part 111 of the support member 110 is provided at a bottom part of a rectangular recess provided to be recessed from the front surface of the support member 110 toward the front in the vehicle length direction L. Further, as illustrated in FIG. 3, the breakable part 112 of the support member 110 is provided at a bottom part of the recess of the support member 110 provided to be recessed toward the front in the vehicle length direction L, so as to surround the support fixing part 111 to which the hinge movable part 122 of the hinge member 120 is fixed.

That is, as illustrated in FIG. 2, the support fixing part 111 of the support member 110 is provided at a top part of a rectangular recess provided to be recessed from the back surface of the support member 110 toward the front in the vehicle length direction L. Further, as illustrated in FIG. 2, the breakable part 112 of the support member 110 is provided at a top part of the recess of the support member 110 provided to be recessed toward the front in the vehicle length direction L so as to surround the support fixing part 111 to which the hinge movable part 122 of the hinge member 120 is fixed.

Further, as illustrated in FIG. 2, the support member 110 has a pair of pins 118a provided at a center part in the vehicle width direction W at an upper end part in the vehicle height direction H, and a pair of pins 118b provided at either side in the vehicle width direction W. As illustrated in FIGS. 1 and 2, the pins 118a at the center part in the vehicle width direction W engage through holes provided in the first part of the movable plate 124. Further, as illustrated in FIG. 5, the pins 118b at either side in the vehicle width direction W are provided between the vertically adjacent projection parts 113 at the support fixing parts 111 at either side in the vehicle width direction W, and are inserted into other through holes provided in the first part of the movable plate 124 and the reinforcing plate 128.

Because the support member 110 has the pins 118a and the pins 118b, the movable plate 124 of the hinge movable part 122 can be positioned relative to the support member 110 when the hinge movable part 122 of the hinge member 120 is fixed to the support fixing part 111 of the support member 110.

Further, as illustrated in FIG. 3, a plurality of through holes 110a are provided at intervals in the peripheral edge part of the support member 110. The support member 110 is fixed to the back surface of the housing of the display device 200 as illustrated in FIG. 1 by screwing and fastening the bolts B, which are inserted into the through holes 110a in the peripheral edge part, into screw holes provided in the back surface of the housing of the display device 200.

Hereinafter, an operation of the buffer support apparatus 100 of the present embodiment will be described.

The buffer support apparatus 100 of the present embodiment includes, as described above, a support member 110 and a hinge member 120 for supporting the support member 110 in a tiltable manner. The hinge member 120 includes a hinge fixing part 121 fixed to a part of the vehicle and a hinge movable part 122 rotatably supported by the hinge fixing part 121. The support member 110 includes a support fixing part 111 to which the hinge movable part 122 is fixed and a breakable part 112 provided around the support fixing part 111 and broken when an impact force acts on the support member 110. The hinge fixing part 121 includes a tilt controlling part 123 for contacting the hinge movable part 122 of the hinge member 120 and controlling the tilt of the support member 110 when the support member 110 tilts to a predetermined angle α or angle β.

When a vehicle mounted with a device such as a display device 200 supported by the support member 110 of the buffer support apparatus 100 having this configuration suddenly stops or collides with something, an object such as an occupant of the vehicle collides with the display device 200 or the like on a side above the rotation axis A of the hinge movable part 122 illustrated in FIG. 4. Then, the support member 110 supporting the display device 200 or the like receives an impact force by the collision of the object through the display device 200 or the like. Then, the hinge movable part 122 of the hinge member 120 fixed to the support fixing part 111 of the support member 110 turns upward around the rotation axis A together with the support member 110 to tilt the support member 110 upward.

When the vehicle suddenly stops or collides with something, an object such as an occupant of the vehicle collides with the display device 200 or the like on a side below the rotation axis A of the hinge movable part 122. Then, the support member 110 supporting the display device 200 receives the impact force by the collision of the object through the display device 200. Then, the hinge movable part 122 of the hinge member 120 fixed to the support fixing part 111 of the support member 110 rotates downward around the rotation axis A together with the support member 110 to tilt the support member 110 downward.

Then, the support member 110 tilts upward or downward until the angle of the perpendicular line VL of the support member 110 substantially orthogonal to the screen of the display device 200 or the like, with respect to the vehicle length direction L, reaches a predetermined angle α or angle β. Then, the tilt controlling part 123 of the hinge fixing part 121 fixed to a part of the vehicle contacts the hinge movable part 122. Thus, the rotation of the hinge movable part 122 and the tilting of the support member 110 accompanying it are controlled.

Then, the reaction force of the impact force received by the support member 110 acts on the support fixing part 111 of the support member 110 through the hinge movable part 122 from the tilt controlling part 123 of the hinge fixing part 121 fixed to a part of the vehicle. As a result, the breakable part 112 provided around the support fixing part 111 is broken, and the impact received by the object colliding with the display device 200 or the like supported by the support member 110 is mitigated.

That is, in the buffer support apparatus 100 of the present embodiment, when an impact force acts on the support member 110, the tilt controlling part 123 of the hinge fixing part 121 controls the tilt of the support member 110 to a predetermined angular range, thereby preventing the stress from being distributed throughout the buffer support apparatus 100. Thus, when an object collides with a device such as a display device 200 supported by the support member 110, the stress due to the impact force of the collision is concentrated in the breakable part 112, and the breakable part 112 is broken to absorb the impact force, thereby mitigating the impact received by the collided object.

In the buffer support apparatus 100 of the present embodiment, the support fixing part 111 of the support member 110 has a projection part 113 projecting toward the hinge movable part 122 of the hinge member 120. The hinge movable part 122 is fixed on the projection part 113.

With this configuration, when the support member 110 receives the impact force through the display device 200 or the like, the reaction force to the impact force acts on the support fixing part 111 through the projection part 113 from the hinge movable part 122 which is in contact with the tilt controlling part 123 of the hinge fixing part 121 and whose rotation is controlled. Thus, the reaction force to the impact force received by the support member 110 can intensively act on the support fixing part 111. As a result, when the support member 110 receives the impact force through the display device 200 or the like, the stress is concentrated on the breakable part 112 around the support fixing part 111, and the breakable part 112 can be broken more surely. Therefore, the impact force acting on the support member 110 through the display device 200 or the like can be absorbed by the breakage of the breakable part 112, and the impact received by the object colliding with the display device 200 or the like can be mitigated.

In the buffer support apparatus 100 of the present embodiment, the support fixing part 111 of the support member 110 has a plurality of projection parts 113 and ribs 114 for connecting the plurality of projection parts 113.

With this configuration, when the support member 110 receives an impact force through the display device 200 or the like, a reaction force to the impact force acts on the support fixing part 111 through the plurality of projection parts 113 from the hinge movable part 122 whose rotation is controlled by contacting the tilt controlling part 123 of the hinge fixing part 121. Further, because the plurality of projection parts 113 are connected by the ribs 114, a reaction force to the impact force received by the support member 110 can equally act on a wider range of the support fixing part 111 from the hinge movable part 122 through the plurality of projection parts 113 and the ribs 114. As a result, the stress is surely concentrated in the breakable part 112 around the support fixing part 111, and the breakable part 112 can be broken more surely. Therefore, the impact force acting on the display device 200 or the like can be absorbed more surely by breaking the breakable part 112 of the support member 110, and the impact received by the object colliding with the display device 200 or the like can be mitigated more surely.

In the buffer support apparatus 100 of the present embodiment, the breakable part 112 of the support member 110 includes a thin part 116 positioned at the bottom of a recess 115 provided in the support member 110.

According to this configuration, when the reaction force of the impact force acting on the support member 110 acts on the support fixing part 111 of the support member 110 from the hinge movable part 122 in contact with the tilt controlling part 123 of the hinge fixing part 121, the stress concentrates on the thin part 116 of the recess 115 provided around it. As a result, the thin part 116 is broken to break the breakable part 112 around the support fixing part 111. Thus, the impact force acting on the support member 110 is absorbed, and the impact received by the object colliding with the display device 200 or the like supported by the support member 110 is mitigated.

In the buffer support apparatus 100 of the present embodiment, the thin part 116 is provided between a plurality of through holes 117 penetrating the support member 110.

With this configuration, when the reaction force of the impact force acting on the support member 110 acts on the support fixing part 111 of the support member 110 from the hinge movable part 122 in contact with the tilt controlling part 123 of the hinge fixing part 121, the stress is concentrated in the thin part 116 of the recess 115 provided around it. At this time, because the thin part 116 is provided between the through holes 117, the stress is easily concentrated in the thin part 116. As a result, the thin part 116 can be broken more surely and the breakable part 112 can be broken more surely. Thus, the impact force acting on the support member 110 is absorbed more surely, and the impact received by the object colliding with the display device 200 or the like supported by the support member 110 is mitigated more surely.

In the buffer support apparatus 100 of the present embodiment, the recess 115 of the support member 110 is a rectangular recessed groove 119 surrounding the support fixing part 111. The through hole 117 of the support member 110 is provided at a corner of the rectangular recessed groove 119.

With this configuration, when the reaction force of the impact force acting on the support member 110 acts on the support fixing part 111 of the support member 110 from the hinge movable part 122 in contact with the tilt controlling part 123 of the hinge fixing part 121, the stress is concentrated in the thin part 116 of the rectangular recessed groove 119 surrounding the support fixing part 111. At this time, because the through hole 117 is provided at a corner of the rectangular recessed groove 119, the stress is easily concentrated in the thin part 116 of the recessed groove 119 between the through hole 117 and the through hole 117. As a result, the thin part 116 can be broken more surely and the breakable part 112 can be broken more surely. Thus, the impact force acting on the support member 110 is absorbed more surely, and the impact received by the object colliding with the display device 200 or the like supported by the support member 110 is mitigated more surely.

In the buffer support apparatus 100 of the present embodiment, the tilt controlling part 123 of the hinge fixing part 121 is arranged to face the hinge movable part 122 and extends in the vertical direction along the rotational direction of the hinge movable part 122.

With this configuration, when the support member 110 is not tilted and the support surface of the support member 110 for supporting the display device 200 or the like is substantially parallel to the vehicle height direction H which is the vertical direction, the tilt controlling part 123 of the hinge fixing part 121 faces the hinge movable part 122 with a space. When the support member 110 is tilted upward around the rotation axis A along the vehicle width direction W and the hinge movable part 122 is rotated to a predetermined angle α with respect to the hinge fixing part 121, the hinge movable part 122 contacts the upper end part of the tilt controlling part 123 and its rotation is controlled. When the support member 110 is tilted downward around the rotation axis A and the hinge movable part 122 is rotated to a predetermined angle β with respect to the hinge fixing part 121, the hinge movable part 122 contacts the lower end part of the tilt controlling part 123 and its rotation is controlled.

Thus, when an impact force acts on the support member 110, the tilting of the support member 110 can be controlled at a predetermined angle α or angle β. As a result, the reaction force of the impact force acting on the support member 110 acts on the support fixing part 111 from the tilt controlling part 123 of the hinge fixing part 121 through the hinge movable part 122, and the stress is concentrated in the breakable part 112 around the support fixing part 111, and the breakable part 112 is broken. Therefore, when an impact force acts on the support member 110 through the display device 200 or the like, the distribution of the impact force due to the tilting of the support member 110 is suppressed, and the breakable part 112 is broken to absorb the impact force, so that the impact received by the object colliding with the display device 200 or the like can be mitigated.

In the buffer support apparatus 100 of the present embodiment, the hinge movable part 122 of the hinge member 120 has a movable plate 124 fixed to the support fixing part 111 of the support member 110, and a shaft 125 inserted into a through hole 126 provided in the movable plate 124. The hinge fixing part 121 of the hinge member 120 has a through hole 127 through which the shaft 125 is inserted.

With this configuration, the hinge fixing part 121 and the hinge movable part 122 of the hinge member 120 are rotatably connected with the center axis of the shaft 125 inserted into the through hole 127 of the hinge fixing part 121 and the through hole 126 of the movable plate 124 of the hinge movable part 122, as the rotation axis A. The hinge fixing part 121 is fixed to a part of the vehicle, and the movable plate 124 of the hinge movable part 122 is fixed to the support fixing part 111 of the support member 110, so that the support member 110 is rotatably supported by the hinge fixing part 121.

In the buffer support apparatus 100 of the present embodiment, the hinge movable part 122 has a reinforcing plate 128 fixed to the movable plate 124 and opposite to the tilt controlling part 123 of the hinge fixing part 121.

With this configuration, the mechanical strength of the hinge movable part 122 contacting the tilt controlling part 123 of the hinge fixing part 121 and controlling the tilt of the support member 110 when the support member 110 is tilted to a predetermined angle α or angle β, can be improved. Thus, the deformation of the movable plate 124 due to the impact force acting on the support member 110 is suppressed, and the reaction force of the impact force can be more surely acted on the support fixing part 111 from the tilt controlling part 123 of the hinge fixing part 121 through the reinforcing plate 128 and the movable plate 124.

As a result, the stress concentrates on the breakable part 112 around the support fixing part 111, and the breakable part 112 breaks. Therefore, when an impact force acts on the support member 110 through the display device 200 or the like, distribution of the impact force due to deformation of the hinge movable part 122 is suppressed, and the breakable part 112 is broken to absorb the impact force, so that the impact received by the object colliding with the display device 200 or the like can be more reliably mitigated.

In the buffer support apparatus 100 of the present embodiment, the support member 110 supports the display device 200 or the information terminal mounted on the vehicle.

With this configuration, the display device 200 or the information terminal can be supported by the support member 110 of the buffer support apparatus 100, whereby the display device 200 or the information terminal can be attached to a part of the vehicle in a tiltable manner. Assume that an object such as an occupant of the vehicle collides with the display device 200 or the information terminal when the vehicle suddenly stops or collides with something. At this time, the tilt controlling part 123 of the hinge fixing part 121 can be brought into contact with the hinge movable part 122 to control the tilting of the support member 110 and break the breakable part 112. Thus, the impact received by the object colliding with the display device 200 or the information terminal can be mitigated.

As described above, it is possible to provide a buffer support apparatus 100 that supports an in-vehicle apparatus in a tiltable manner and can exert a sufficient buffering action when an object collides with the device.

Hereinafter, the buffering action of the buffer support apparatus according to the embodiment of the present invention having the same configuration as that of the buffer support apparatus 100 according to the foregoing embodiment will be described in comparison with a support apparatus according to a comparative example different from the buffer support apparatus according to the present invention.

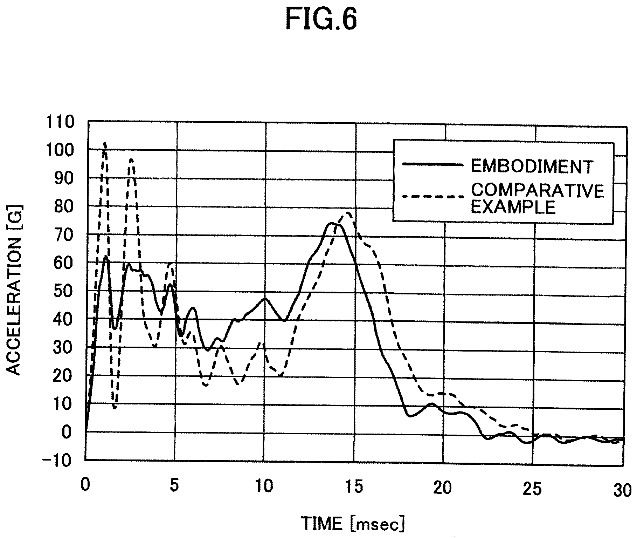

FIG. 6 is a graph illustrating the buffering action of the buffer support apparatus according to the embodiment of the present invention and a support apparatus according to a comparative example different from the present invention. The graph of FIG. 6 illustrates a temporal change in the acceleration of an object that collides with a display device supported by the respective apparatuses, with the horizontal axis representing time [msec] and the vertical axis representing acceleration [G].

As illustrated by a broken line in FIG. 6, the acceleration of the object that collides with the display device supported by the support apparatus according to the comparative example exceeds 100 [G] from immediately after the collision until 3 [msec] elapses, and thereafter, a peak of acceleration exceeding 90 [G] appears. It is presumed that this is caused by the fact that, in the support apparatus according to the comparative example, when the object collides with the display device, the support member for supporting the display device largely tilts, and the impact force is distributed such that the breakable part is not broken.

On the other hand, as illustrated by a solid line in FIG. 6, the peak acceleration of the object that collides with the display device supported by the buffer support apparatus of the embodiment is reduced to 62 [G] until 3 [msec] elapses immediately after the collision, and the peak thereafter is also lower than 60 [G]. It is presumed that this is caused by the fact that, in the buffer support apparatus of the embodiment, the tilt of the support member that supports the display device when the object collides with it is controlled by the tilt controlling part, and the stress concentrates on the breakable part, causing the breakable part to break. Therefore, according to the present embodiment, it is possible to provide a buffer support apparatus that supports a device mounted on a vehicle in a tiltable manner and can exert a sufficient buffer action when the object collides with the apparatus.

Embodiments and examples of the buffer support apparatus according to the present disclosure have been described in detail. However, the buffer support apparatus according to the present disclosure is not limited to the above-described embodiments and examples. Various modifications may be applied to the above-described embodiments and examples without departing from the scope of the claims.

## Claims

1. A buffer support apparatus comprising:
a support member; and
a hinge member configured to support the support member in a tiltable manner, wherein
the hinge member includes a hinge fixing part fixed to a part of a vehicle and a hinge movable part rotatably supported by the hinge fixing part,
the support member includes a support fixing part fixed to the hinge movable part and a breakable part that is provided around the support fixing part and that breaks when an impact force acts on the support member, and
the hinge fixing part includes a tilt controlling part configured to control a tilt of the support member by contacting the hinge movable part when the support member tilts to a predetermined angle.

2. The buffer support apparatus according to claim 1, wherein
the support fixing part includes a projection part projecting toward the hinge movable part, and
the hinge movable part is fixed on the projection part.

3. The buffer support apparatus according to claim 2, wherein the support fixing part includes a plurality of the projection parts and ribs connecting the plurality of projection parts.

4. The buffer support apparatus according to one of claims 1 to 3, wherein the breakable part includes a thin part located at a bottom of a recess provided in the support member.

5. The buffer support apparatus according to claim 4, wherein the thin part is provided between a plurality of through holes penetrating the support member.

6. The buffer support apparatus according to claim 5, wherein
the recess of the support member is a rectangular recessed groove surrounding the support fixing part, and
each of the through holes of the support member is provided at a corner of the rectangular recessed groove.

7. The buffer support apparatus according to one of claims 1 to 6, wherein the tilt controlling part is arranged opposite to the hinge movable part and extends in a vertical direction along a rotational direction of the hinge movable part.

8. The buffer support apparatus according to one of claims 1 to 7,
wherein
the hinge movable part includes a movable plate fixed to the support fixing part and a shaft inserted into a through hole provided in the movable plate, and
the hinge fixing part includes a through hole through which the shaft is inserted.

9. The buffer support apparatus according to claim 8, wherein the hinge movable part includes a reinforcing plate fixed to the movable plate and opposite to the tilt controlling part.

10. The buffer support apparatus according to one of claims 1 to 9, wherein the support member supports a display device or an information terminal mounted in the vehicle.
